# EUROPÄISCHE PATENTSCHRIFT

(11) **EP 1 655 192 B1**
(45) Veröffentlichungstag und Bekanntmachung des Hinweises auf die Patenterteilung: **16.07.2008**
(21) Anmeldenummer: 05023352.7
(22) Anmeldetag: 26.10.2005
(51) Int. Cl.: B60T 11/16, B60T 13/24, B60T 17/22

(54) **Unterdruck-Bremskraftverstärker für Kraftfahrzeuge**
Vacuum brake booster for motor vehicles
Servofrein à dépression pour véhicules automobiles

(30) Priorität: 06.11.2004 DE 102004053844
(43) Veröffentlichungstag der Anmeldung: 10.05.2006
(73) Patentinhaber: FTE automotive GmbH, 96106 Ebern (DE)
(72) Erfinder: Seidl, Rolf, 97461 Rügheim (DE)
(74) Vertreter: Oppermann, Mark

(56) Entgegenhaltungen:
- DE-A1- 3 332 546
- DE-A1- 4 141 353
- US-A- 3 661 054
- US-A- 4 453 380

## Beschreibung

### TECHNISCHES GEBIET

Die Erfindung bezieht sich auf einen Unterdruck-Bremskraftverstärker für Kraftfahrzeuge gemäß dem Oberbegriff des Patentanspruchs 1, wie sie massenweise in der Automobilindustrie zum Einsatz kommen.

### STAND DER TECHNIK

Aus der gattungsbildenden DE-A-33 32 546 ist ein vakuumbetriebener Bremskraftverstärker bekannt, der ein Verstärkergehäuse aufweist, in dem eine Unterdruckkammer von einer Arbeitskammer mittels eines Verstärkerkolbens getrennt ist. Der Verstärkerkolben weist eine Rollmembran und einen damit verbundenen Kolbenschaft - auch Steuergehäuse genannt - auf, der sich durch eine arbeitskammerseitige Öffnung des Verstärkergehäuses hindurch erstreckt. Im Bereich dieser Öffnung ist an dem Verstärkergehäuse ein Gleitführungsring angebracht, der mehrere Funktionen erfüllen soll.

Zum einen dient der Gleitführungsring mit seiner Innenumfangsfläche der Führung des relativ zum Verstärkergehäuse längsverschieblichen Steuergehäuses gegenüber dem Verstärkergehäuse. Zum anderen soll der Gleitführungsring die Arbeitskammer zur Umgebung hin abdichten. Hierfür sind an einem metallischen Grundkörper des Gleitführungsrings elastomere Dichtabschnitte anvulkanisiert. Genauer gesagt hat der Grundkörper des Gleitführungsrings einen ersten hohlzylindrischen Abschnitt größeren Durchmessers, dessen Außenumfang mit einem Elastomer ummantelt ist, um einen gegenüber einem hohlzylindrischen Halsansatz des Verstärkergehäuses abdichtenden statischen Dichtabschnitt zu schaffen. Ferner weist der Grundkörper einen zweiten hohlzylindrischen Abschnitt kleineren Durchmessers auf, der über einen Ringbund mit dem ersten hohlzylindrischen Abschnitt verbunden ist und an dessen vom Ringbund abgewandten Ende eine axial und nach radial innen vorstehende, elastomere Dichtlippe anvulkanisiert ist, um einen gegenüber einer Außenumfangsfläche des Steuergehäuses abdichtenden dynamischen Dichtabschnitt bereitzustellen. Darüber hinaus ist an der der Arbeitskammer zugewandten Seite des Ringbunds des Grundkörpers ein Ringwulst anvulkanisiert, der eine Anschlagfläche ausbildet, an der ein das Steuergehäuse durchgreifendes Querglied zur Anlage gelangen kann, um einen Rückhub des Steuergehäuses gegenüber dem Verstärkergehäuse zu begrenzen.

Ein Nachteil dieses Stands der Technik wird darin gesehen, daß die Montage des Gleitführungsrings im Halsansatz des Verstärkergehäuses mit einem relativ großen, in der Massenfertigung unerwünschten Aufwand verbunden ist. Bei dieser Montage müssen nämlich zunächst die Mittelachsen des Gleitführungsrings einerseits und des Halsansatzes des Verstärkergehäuses andererseits genau zueinander ausgefluchtet werden bevor der Gleitführungsring in den aufwendig mit einer Gleitbeschichtung versehenen Halsansatz eingepreßt werden kann, andernfalls der statische Dichtabschnitt des Gleitführungsrings beim Einpreßvorgang vom Grundkörper des Gleitführungsrings abgestreift oder durch Einreißen beschädigt wird. Sodann ist ein Prüfschritt unerläßlich, um festzustellen, ob bei der Montage des Gleitführungsrings dessen statischer Dichtabschnitt beschädigt wurde, was eine Undichtigkeit der Arbeitskammer zur Folge haben könnte.

Eine geringere Gefahr einer montagebedingten Dichtungsbeschädigung besteht bei einer Konstruktion eines Unterdruck-Bremskraftverstärkers, wie sie aus der US-A-4 453 380 bekannt ist. Bei diesem Stand der Technik (siehe die Fig. 2 und 3) ist zur Erfüllung der Funktionen (a) Führung des Steuergehäuses gegenüber dem Verstärkergehäuse, (b) statische Abdichtung der Arbeitskammer gegenüber der Umgebung am Verstärkergehäuse, (c) dynamische Abdichtung der Arbeitskammer gegenüber der Umgebung am Steuergehäuse und (d) Begrenzung des Rückhubs des Steuergehäuses gegenüber dem Verstärkergehäuse eine Baugruppe vorgesehen, die aus drei Bestandteilen besteht, nämlich einem Befestigungsring, einem Führungsring und einem Dichtring.

Der metallische Befestigungsring ist bei diesem Stand der Technik fest mit einem Ringbund am Außenumfang des Halsansatzes des Verstärkergehäuses verkrimpt und hält den Führungsring mittels Formschluß an vorbestimmter Stelle im Halsansatz. Der Führungsring hat auf seiner der Arbeitskammer zugewandten Seite einen im Querschnitt gesehen hakenförmigen Fortsatz, an dem der elastomere Dichtring mit einem komplementär geformten Fortsatz eingehängt ist. Der sich somit im wesentlichen axial in Richtung der Arbeitskammer an den Führungsring anschließende Dichtring liegt mit seiner Außenumfangsfläche am Innenumfang des Halsansatzes des Verstärkergehäuses an, um für die statische Abdichtung zu sorgen, und hat eine sich nach radial innen erstreckende, am Außenumfang des Steuergehäuses anliegende Dichtlippe, die der dynamischen Abdichtung dient. Schließlich bildet die arbeitskammerseitige Stirnfläche des Dichtrings einen Anschlag für das Steuergehäuse aus, um dessen Rückhub bezüglich des Verstärkergehäuses zu begrenzen.

Als nachteilig wird bei diesem Stand der Technik jedoch der axiale Anschlag des Steuergehäuses am Dichtring angesehen, der zu einer axialen Stauchung des Dichtrings führt, die wiederum mit einer stärkeren Verpressung der Dichtlippe mit dem Steuergehäuse einhergeht. Diese Verpressung führt zum einen zu einer unerwünschten Erhöhung der anfänglich zur Verschiebung des Steuergehäuses in das Verstärkergehäuse hinein benötigten Kraft. Zum anderen hat diese Verpressung zur Folge, daß sich der Dichtring mit der Zeit "setzt", was zu Dichtfunktionseinbußen an der dynamisch beanspruchten Dichtlippe führen kann.

### DARSTELLUNG DER ERFINDUNG

Ausgehend vom Stand der Technik gemäß der DE-A-33 32 546 liegt der Erfindung die Aufgabe zugrunde, einen Unterdruck-Bremskraftverstärker zu schaffen, der eine möglichst einfach zu montierende Dichtvorrichtung zwischen Verstärkergehäuse und Arbeitskolbenschaft aufweist, welche die Arbeitskammer des Unterdruck-Bremskraftverstärkers zuverlässig und dauerhaft gegen die Umgebung abzudichten vermag.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 17.

Bei einem Unterdruck-Bremskraftverstärker für Kraftfahrzeuge, der ein Verstärkergehäuse hat, in dem eine Unterdruckkammer von einer Arbeitskammer mittels eines Arbeitskolbens getrennt ist, welcher einen Arbeitskolbenschaft aufweist, der sich durch eine arbeitskammerseitige Öffnung des Verstärkergehäuses hindurch erstreckt, wobei an dem Verstärkergehäuse im Bereich der Öffnung eine Dichtvorrichtung angebracht ist, die einen gegenüber dem Verstärkergehäuse abdichtenden statischen Dichtabschnitt, einen gegenüber dem Arbeitskolbenschaft abdichtenden dynamischen Dichtabschnitt, einen Führungsabschnitt für den Arbeitskolbenschaft sowie eine Anschlagfläche für ein den Arbeitskolbenschaft durchgreifendes, einen Rückhub des Arbeitskolbens begrenzendes Querglied aufweist, ist die Dichtvorrichtung erfindungsgemäß zweigeteilt, mit einem den Führungsabschnitt und die Anschlagfläche ausbildenden, am Verstärkergehäuse befestigten Ankerteil sowie einem den statischen Dichtabschnitt und den dynamischen Dichtabschnitt aufweisenden Dichtungsteil, das nach Befestigung des Ankerteils am Verstärkergehäuse an dem Ankerteil anbringbar ist.

Durch die vorgesehene Zweiteilung der Dichtvorrichtung in Ankerteil und Dichtungsteil besteht eine klare funktionale Zuordnung von Führungs- sowie Anschlagfunktion zum Ankerteil einerseits und statischer sowie dynamischer Dichtfunktion zum Dichtungsteil andererseits. Infolgedessen können sich die Führung des Arbeitskolbenschafts am Führungsabschnitt des Ankerteils und die Begrenzung des Rückhubs des Arbeitskolbens vermittels der Anschlagfläche am Ankerteil, an der das den Arbeitskolbenschaft durchgreifende Querglied anschlagen kann, nicht nachteilig auf die durch das Dichtungsteil bewirkte Abdichtung der Arbeitskammer zur Umgebung hin auswirken, anders als im oben beschriebenen Stand der Technik. So werden im Betrieb des Unterdruck-Bremskraftverstärkers Kräfte, die etwa aus einer Schrägstellung bzw. Fehllage des Arbeitskolbenschafts bezüglich der arbeitskammerseitigen Öffnung im Verstärkergehäuse oder z.B. einer Schrägstellung bzw. Fehllage des Querglieds bezüglich des Arbeitskolbenschafts resultieren und über den Führungsabschnitt bzw. die Anschlagfläche in das Ankerteil eingeleitet werden, über dessen Befestigung am Verstärkergehäuse direkt in das Verstärkergehäuse weitergeleitet, ohne daß diese Kräfte ein ggf. der Dichtwirkung abträgliches Stauchen oder Verkanten des Dichtungsteils zur Folge hätten. Darüber hinaus besteht bei der erfindungsgemäßen Befestigung der Dichtvorrichtung am Verstärkergehäuse im Gegensatz zum gattungsbildenden Stand der Technik keine Gefahr einer montagebedingten Beschädigung der Dichtabschnitte, weil alleine das Ankerteil der Befestigung der Dichtvorrichtung am Verstärkergehäuse dient, während das Dichtungsteil nach erfolgter Montage des Ankerteils am Verstärkergehäuse am Ankerteil angebracht werden kann. Im Ergebnis wird ein Unterdruck-Bremskraftverstärker geschaffen, dessen Dichtvorrichtung zwischen Verstärkergehäuse und Arbeitskolbenschaft weder besonders eng tolerierte Nachbarbauteile noch aufwendige Positionier- oder Prüfschritte bei der - mithin zur Automatisierung gut geeigneten - Montage erfordert und dennoch für eine zuverlässige und dauerhafte Abdichtung der Arbeitskammer gegen die Umgebung im Betrieb des Unterdruck-Bremskraftverstärkers sorgt.

Zweckmäßig kann das Verstärkergehäuse einen hohlzylindrischen Halsansatz aufweisen, der an seinem von der Arbeitskammer abgewandten Ende mit einem sich nach radial innen erstreckenden Ringbund endet. Bekannte Verstärkergehäuse-Konstruktionen müssen somit für den Einsatz der vorgeschlagenen zweigeteilten Dichtvorrichtung nicht geändert werden.

Wenn das Ankerteil der Dichtvorrichtung auf der der Arbeitskammer zugewandten Seite des Ringbunds am Halsansatz des Verstärkergehäuses angeordnet ist, während das Dichtungsteil der Dichtvorrichtung auf der von der Arbeitskammer abgewandten Seite des Ringbunds angeordnet ist, läßt sich die Dichtvorrichtung, insbesondere deren Dichtungsteil besonders leicht montieren. Darüber hinaus sorgt diese Ausgestaltung des Unterdruck-Bremskraftverstärkers für einen nur kleinen Bauraumbedarf für die Dichtvorrichtung im Verstärkergehäuse.

Grundsätzlich ist es denkbar, daß das Ankerteil der Dichtvorrichtung mit geringfügigem Spiel in den Halsansatz des Verstärkergehäuses eingesetzt wird bevor der Halsansatz mit dem Ankerteil etwa verstemmt bzw. verkrimpt wird, ebenfalls daß das Ankerteil der Dichtvorrichtung in den Halsansatz eingeklebt oder - bei Vorhandensein geeigneter Gewindeabschnitte an Halsansatz und Ankerteil - eingeschraubt wird. Im Hinblick auf insbesondere eine einfache Montage der Dichtvorrichtung ist es jedoch bevorzugt, wenn das Ankerteil der Dichtvorrichtung in den Halsansatz des Verstärkergehäuses eingepreßt ist und auf der der Arbeitskammer zugewandten Seite des Ringbunds am Ringbund anliegt. Der zur Herstellung einer Preßverbindung zwischen Ankerteil und Halsansatz erforderliche Einpreßvorgang läßt sich mit im Verhältnis geringen Montagevorrichtungsaufwand realisieren, wobei der Ringbund am Halsansatz des Verstärkergehäuses vorteilhaft als Endanschlag für das Ankerteil beim Einpreßvorgang dienen kann.

In einer besonders einfachen Ausgestaltung des Ankerteils der Dichtvorrichtung kann das Ankerteil zwei Hohlzylinderabschnitte unterschiedlichen Durchmessers aufweisen, die mittels eines Ringstegs miteinander verbunden sind. Hierbei kann der durchmessergrößere Hohlzylinderabschnitt des Ankerteils der Befestigung des Ankerteils am Verstärkergehäuse dienen. Eine Innenumfangsfläche des durchmesserkleineren Hohlzylinderabschnitts des Ankerteils hingegen kann den Führungsabschnitt für den Arbeitskolbenschaft ausbilden. Der Ringsteg des Ankerteils kann hier schließlich mit seiner der Arbeitskammer zugewandten Stirnseite die Anschlagfläche für das den Arbeitskolbenschaft durchgreifende, den Rückhub des Arbeitskolbens begrenzende Querglied bilden.

Vorteilhaft kann ferner das Dichtungsteil der Dichtvorrichtung einen ringförmigen Grundkörper aufweisen, an dessen der Arbeitskammer zugewandten Stirnseite eine sich in Richtung der Arbeitskammer im wesentlichen konisch aufweitende, elastomere Dichtlippe angebracht ist, die den statischen Dichtabschnitt der Dichtvorrichtung ausbildet. Eine solche Dichtlippe vermag sich etwaigen Form- und Lagetoleranzen der angrenzenden Bauteile deutlich besser anzupassen als die im gattungsbildenden Stand der Technik den statischen Dichtabschnitt ausbildende Ummantelung des Gleitführungsrings mit einem Elastomer. Wenn hierbei die sich im wesentlichen konisch aufweitende, elastomere Dichtlippe auf der von der Arbeitskammer abgewandten Seite des Ringbunds am Halsansatz des Verstärkergehäuses dichtend am Ringbund anliegt, wird für eine statische Abdichtung in axialer Richtung gesorgt, die der Erzielung geringer radialer Abmessungen der Dichtvorrichtung förderlich ist. Zudem ist eine gesonderte Bearbeitung einer Gegenfläche für die statische Dichtlippe nicht erforderlich, vielmehr wird als Gegenfläche für die Dichtlippe eine Stirnseite des Ringbunds genutzt, der ohnehin am Halsansatz des Verstärkergehäuses angearbeitet ist.

Zweckmäßig kann das Dichtungsteil der Dichtvorrichtung einen ringförmigen Grundkörper aufweisen, an dessen von der Arbeitskammer abgewandten Stirnseite eine sich in Richtung von der Arbeitskammer weg im wesentlichen konisch verjüngende, elastomere Dichtlippe angebracht ist, die den dynamischen Dichtabschnitt der Dichtvorrichtung ausbildet. Hierbei kann die sich im wesentlichen konisch verjüngende, elastomere Dichtlippe dichtend an einer zylindrischen Außenumfangsfläche des Arbeitskolbenschafts anliegen. Erstrecken sich die statische Dichtlippe und die dynamische Dichtlippe zu verschiedenen Seiten des ringförmigen Grundkörpers des Dichtungsteils können sich die statische Abdichtung und die dynamische Abdichtung der Arbeitskammer gegenüber der Umgebung gegenseitig nicht negativ beeinflussen.

Im weiteren Verfolg des Erfindungsgedankens kann das Dichtungsteil der Dichtvorrichtung mittels einer Schnappverbindung am Ankerteil der Dichtvorrichtung anbringbar sein. Grundsätzlich sind hier zwar auch andere Verbindungsarten (Schraubverbindung, Klebeverbindung, etc.) denkbar, eine Schnappverbindung zwischen Dichtungsteil und Ankerteil hat jedoch zum einen den Vorteil, daß das Dichtungsteil besonders leicht und ohne Werkzeuge an dem am Verstärkergehäuse befestigten Ankerteil montiert werden kann. Zum anderen führt eine Schnappverbindung zwischen Dichtungsteil und Ankerteil zu einer gewissen, wenn auch nur geringen Beweglichkeit des Dichtungsteils bezüglich des Ankerteils, die - in Grenzen - eine Selbstzentrierung des Dichtungsteils gegenüber den Gegenflächen zum statischen und dynamischen Dichtabschnitt gestattet, was einer guten Dichtwirkung förderlich ist.

Grundsätzlich ist es denkbar, daß hierbei das Dichtungsteil federnde Abschnitte mit hakenartigen Vorsprüngen aufweist, die im am Ankerteil montierten Zustand des Dichtungsteils eine Widerlagerfläche am Ankerteil hintergreifen. Bevorzugt ist jedoch eine Ausgestaltung, bei der das Ankerteil eine Mehrzahl von Federzungen aufweist, die jeweils mit einem hakenartigen Vorsprung versehen sind, während das Dichtungsteil eine Widerlagerfläche für die hakenartigen Vorsprünge hat, wobei im am Ankerteil angebrachten Zustand des Dichtungsteils die hakenartigen Vorsprünge des Ankerteils die Widerlagerfläche des Dichtungsteils hintergreifen.

In der bereits weiter oben angesprochenen, einfachen Ausgestaltung des Ankerteils kann dabei der durchmesserkleinere Hohlzylinderabschnitt des Ankerteils mit gleichmäßig über den Umfang verteilten Aussparungen versehen sein, in die sich jeweils eine der Federzungen vom Ringsteg des Ankerteils ausgehend hinein erstreckt.

Wenn bei dieser Ausgestaltung des Ankerteils die Federzungen bezüglich der Innenumfangsfläche des durchmesserkleineren Hohlzylinderabschnitts des Ankerteils nach radial außen versetzt angeordnet sind und außenumfangsseitig die hakenartige Vorsprünge tragen, können die Federzungen zur Herstellung der Schnappverbindung auch dann noch einfedern, wenn sich der Arbeitskolbenschaft bereits durch das am Verstärkergehäuse befestigte Ankerteil hindurch erstreckt, so daß auch eine nachträgliche Montage bzw. ein nachträglicher Austausch des Dichtungsteils noch problemlos möglich ist.

Schließlich kann der ringförmige Grundkörper des Dichtungsteils innenumfangsseitig eine Ringschulter aufweisen, die vom elastomeren Material der Dichtlippen des Dichtungsteils umspritzt die Widerlagerfläche für die hakenartigen Vorsprünge des Ankerteils ausbildet. Diese Umspritzung der Ringschulter mit dem elastomeren Material der Dichtlippen sorgt insbesondere für eine gewisse Elastizität im Bereich der Widerlagerfläche für die hakenartigen Vorsprünge des Ankerteils, die ebenfalls - in Grenzen - Ausgleichsbewegungen des Dichtungsteils bezüglich des Ankerteils gestattet, was wiederum einer guten Dichtwirkung förderlich ist.

### KURZE BESCHREIBUNG DER ZEICHNUNGEN

Im folgenden wird die Erfindung anhand eines bevorzugten Ausführungsbeispiels unter Bezugnahme auf die beigefügten Zeichnungen näher erläutert, in denen elastomere Teile zur Vereinfachung der Darstellung im unverformten Zustand gezeigt sind. In den Zeichnungen zeigen:
- Fig. 1: eine abgebrochene Längsschnittansicht eines erfindungsgemäßen Unterdruck-Bremskraftverstärkers mit einer zweigeteilten Dichtvorrichtung zwischen Verstärkergehäuse und Arbeitskolbenschaft, die ein Ankerteil und ein daran angebrachtes Dichtungsteil aufweist,
- Fig. 2: eine im Maßstab gegenüber der Darstellung in Fig. 1 vergrößerte Perspektivansicht des Ankerteils der zweigeteilten Dichtvorrichtung des Unterdruck-Bremskraftverstärkers gemäß Fig. 1,
- Fig. 3: eine Draufsicht auf das Ankerteil gemäß Fig. 2,
- Fig. 4: eine Schnittansicht des Ankerteils gemäß Fig. 2 entsprechend der Schnittverlaufslinie IV-IV in Fig. 3,
- Fig. 5: eine vergrößerte Darstellung des Details V in Fig. 4,
- Fig. 6: eine im Maßstab gegenüber der Darstellung in Fig. 1 vergrößerte Perspektivansicht des Dichtungsteils der zweigeteilten Dichtvorrichtung des Unterdruck-Bremskraftverstärkers gemäß Fig. 1,
- Fig. 7: eine Längsschnittansicht des Dichtungsteils gemäß Fig. 6,
- Fig. 8: eine Schnittansicht des Dichtungsteils gemäß Fig. 6 entsprechend der Schnittverlaufslinie VIII-VIII in Fig. 7 und
- Fig. 9: eine vergrößerte Darstellung des Details IX in Fig. 7.

### DETAILLIERTE BESCHREIBUNG EINES AUSFÜHRUNGSBEISPIELS

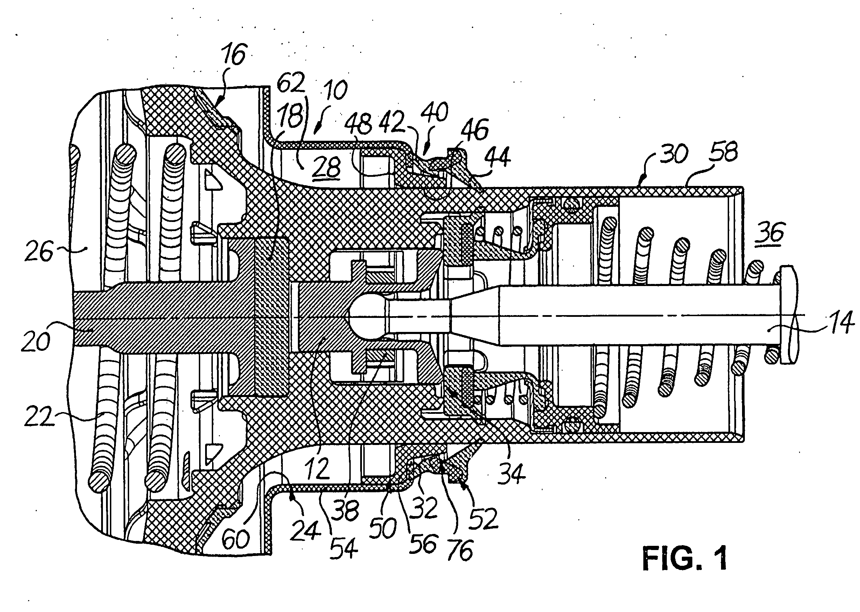

Die Fig. 1 zeigt einen Unterdruck-Bremskraftverstärker 10 einer Hilfskraft-Bremsanlage für Kraftfahrzeuge im unbetätigten Zustand, der auf seiner in Fig. 1 linken Seite an einem Hauptzylinder in Einfach- oder Tandem-Bauweise und auf seiner in Fig. 1 rechten Seite an einem Bremspedal angeschlossen ist. Der in konventioneller Weise mit Radbremszylindern verbundene Hauptzylinder und das Bremspedal sind wie im Stand der Technik bekannt ausgebildet und aus Gründen der Übersichtlichkeit in Fig. 1 nicht dargestellt. Ebenso wurde auf eine vollständige Darstellung des Unterdruck-Bremskraftverstärkers 10 verzichtet, da er sich hinsichtlich der nicht gezeigten Teile nicht von herkömmlichen Unterdruck-Bremskraftverstärkern unterscheidet.

Der Unterdruck-Bremskraftverstärker 10 weist in an sich bekannter Weise einen Steuerkolben 12 auf, der mittels einer Kolbenstange 14 an dem Bremspedal angeschlossen ist, und hat einen Arbeitskolben 16, der über ein elastisches Reaktionsglied in Form einer elastomeren Reaktionsscheibe 18 und einen Stößel 20 mit dem Hauptzylinder wirkverbunden ist. Der mittels einer Rückstellfeder 22 in Fig. 1 nach rechts vorgespannte Arbeitskolben 16 trennt in einem Verstärkergehäuse 24 des Unterdruck-Bremskraftverstärkers 10 eine in Fig. 1 links vom Arbeitskolben 16 befindliche Unterdruckkammer 26 von einer Arbeitskammer 28 und weist einen Arbeitskolbenschaft 30 - auch Steuergehäuse genannt - auf, der sich durch eine arbeitskammerseitige Öffnung 32 des Verstärkergehäuses 24 hindurch erstreckt. Zwischen dem Steuerkolben 12 und dem Arbeitskolben 16 ist eine Ventilanordnung 34 vorgesehen, die über den Steuerkolben 12 in Abhängigkeit von der Pedalkraft und dem Pedalweg angesteuert werden kann, um die Arbeitskammer 28 zu deren Evakuierung mit der Unterdruckkammer 26 zu verbinden oder um die Arbeitskammer 28 zu deren Druckbeaufschlagung mit der Umgebung 36 zu verbinden und somit im Hauptzylinder einen vorbestimmten Bremsdruck zu erzeugen. Aufbau und Wirkungsweise der Ventilanordnung 34 sind - ebenso wie die Verstärkerfunktion des Unterdruck-Bremskraftverstärkers 10 - Fachleuten hinreichend bekannt und sollen deshalb an dieser Stelle nicht näher beschrieben werden. Erwähnt werden soll in diesem Zusammenhang lediglich noch, daß der Arbeitskolbenschaft 30 von einem Querglied 38 durchgriffen wird, welches in an sich bekannter Weise die Aufgabe hat, zum einen eine axiale Verschiebung des Steuerkolbens 12 gegenüber dem Arbeitskolben 16 und zum anderen einen Rückhub des Arbeitskolbens 16 bezüglich des Verstärkergehäuses 24 zu begrenzen.

Wie nachfolgend noch näher beschrieben werden wird, ist an dem Verstärkergehäuse 24 im Bereich der Öffnung 32 eine Dichtvorrichtung 40 angebracht, die einen gegenüber dem Verstärkergehäuse 24 abdichtenden statischen Dichtabschnitt 42, einen gegenüber dem Arbeitskolbenschaft 30 abdichtenden dynamischen Dichtabschnitt 44, einen Führungsabschnitt 46 für den Arbeitskolbenschaft 30 sowie eine Anschlagfläche 48 für das den Arbeitskolbenschaft 30 durchgreifende, den Rückhub des Arbeitskolbens 16 begrenzende Querglied 38 aufweist. Wesentlich ist, daß die Dichtvorrichtung 40 zweigeteilt ist, mit einem den Führungsabschnitt 46 und die Anschlagfläche 48 ausbildenden, am Verstärkergehäuse 24 befestigten Ankerteil 50 sowie einem den statischen Dichtabschnitt 42 und den dynamischen Dichtabschnitt 44 aufweisenden Dichtungsteil 52, das nach Befestigung des Ankerteils 50 am Verstärkergehäuse 24 an dem Ankerteil 50 anbringbar ist.

Gemäß Fig. 1 hat das aus einem Kunststoff oder einem metallischen Blech bestehende Verstärkergehäuse 24 einen hohlzylindrischen Halsansatz 54, der den Arbeitskolbenschaft 30 konzentrisch umgibt und an seinem von der Arbeitskammer 28 abgewandten Ende mit einem Ringbund 56 endet. Der Ringbund 56 erstreckt sich senkrecht zur Mittelachse des Halsansatzes 54 nach radial innen. Der Arbeitskolbenschaft 30 hingegen weist eine zylindrische Außenumfangsfläche 58 auf, die zusammen mit einer zylindrischen Innenumfangsfläche 60 des Halsansatzes 54 einen Ringraum 62 begrenzt. In den Ringraum 62 ist das Ankerteil 50 der Dichtvorrichtung 40 eingesetzt. Genauer gesagt ist das vorzugsweise aus einem Kunststoff spritzgegossene Ankerteil 50 von links in Fig. 1 in den Halsansatz 54 des Verstärkergehäuses 24 eingepreßt und liegt auf der der Arbeitskammer 28 zugewandten Seite des Ringbunds 56 am Ringbund 56 an. Im Ergebnis ist das Ankerteil 50 der Dichtvorrichtung 40 auf der der Arbeitskammer 28 zugewandten Seite des Ringbunds 56 angeordnet, während sich das Dichtungsteil 52 der Dichtvorrichtung 40 auf der von der Arbeitskammer 28 abgewandten Seite des Ringbunds 56 befindet.

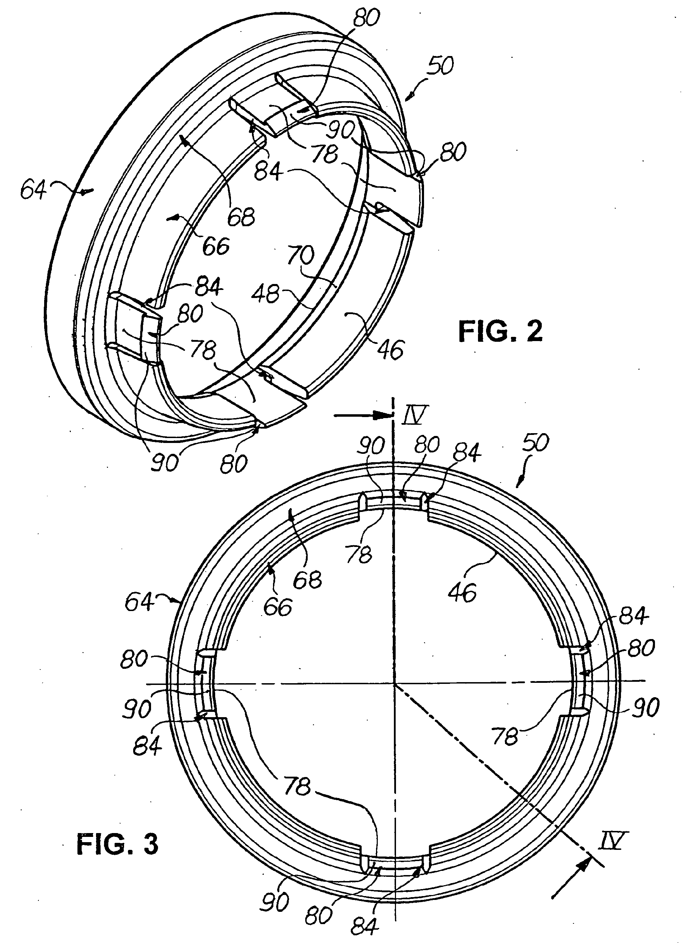

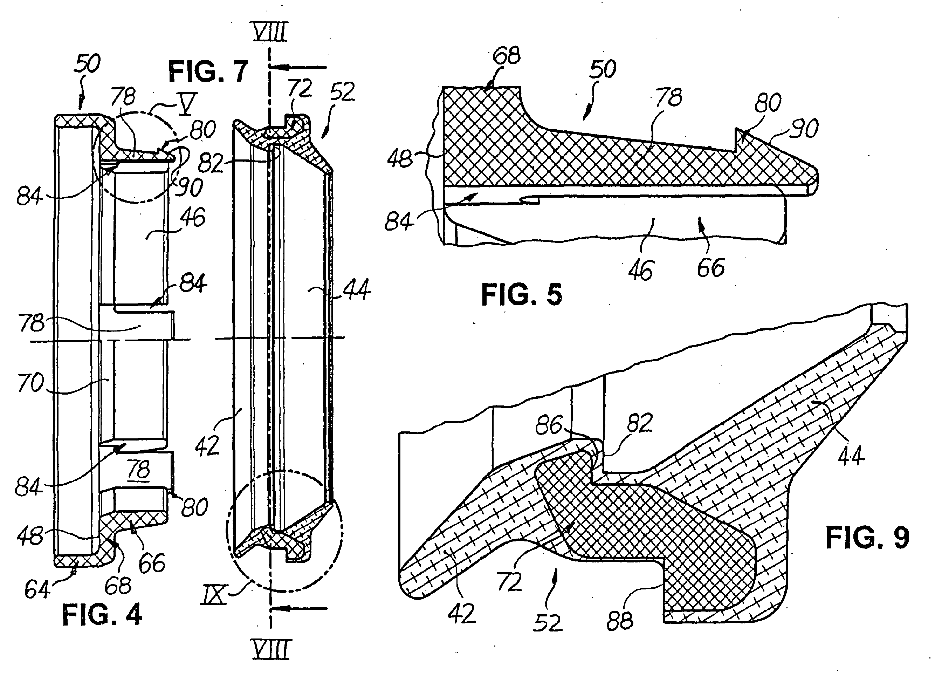

Den Fig. 2 bis 5 sind weitere Details des Ankerteils 50 der Dichtvorrichtung 40 zu entnehmen. Wie insbesondere die Fig. 2 und 4 zeigen, weist das Ankerteil 50 zwei Hohlzylinderabschnitte 64, 66 unterschiedlichen Durchmessers auf, die mittels eines Ringstegs 68 miteinander verbunden sind. Der durchmessergrößere Hohlzylinderabschnitt 64 des Ankerteils 50 dient, wie unter Bezugnahme auf die Fig. 1 bereits beschrieben, der Befestigung des Ankerteils 50 im Halsansatz 54 des Verstärkergehäuses 24. Eine Innenumfangsfläche des durchmesserkleineren Hohlzylinderabschnitts 66 des Ankerteils 50 hingegen, deren Durchmesser nur geringfügig größer ist als der Durchmesser der Außenumfangsfläche 58 des Arbeitskolbenschafts 30, bildet den Führungsabschnitt 46 für den Arbeitskolbenschaft 30 aus. Der Ringsteg 68 des Ankerteils 50, der mit seiner von der Arbeitskammer 28 abgewandten Stirnseite am Ringbund 56 des Verstärkergehäuses 24 anliegt, bildet mit seiner der Arbeitskammer 28 zugewandten Stirnseite die ringförmige Anschlagfläche 48 für das den Arbeitskolbenschaft 30 durchgreifende, den Rückhub des Arbeitskolbens 16 begrenzende Querglied 38 aus. Zwischen der Anschlagfläche 48 und dem Führungsabschnitt 46 befindet sich schließlich eine Fügeschräge 70 für den Arbeitskolbenschaft 30.

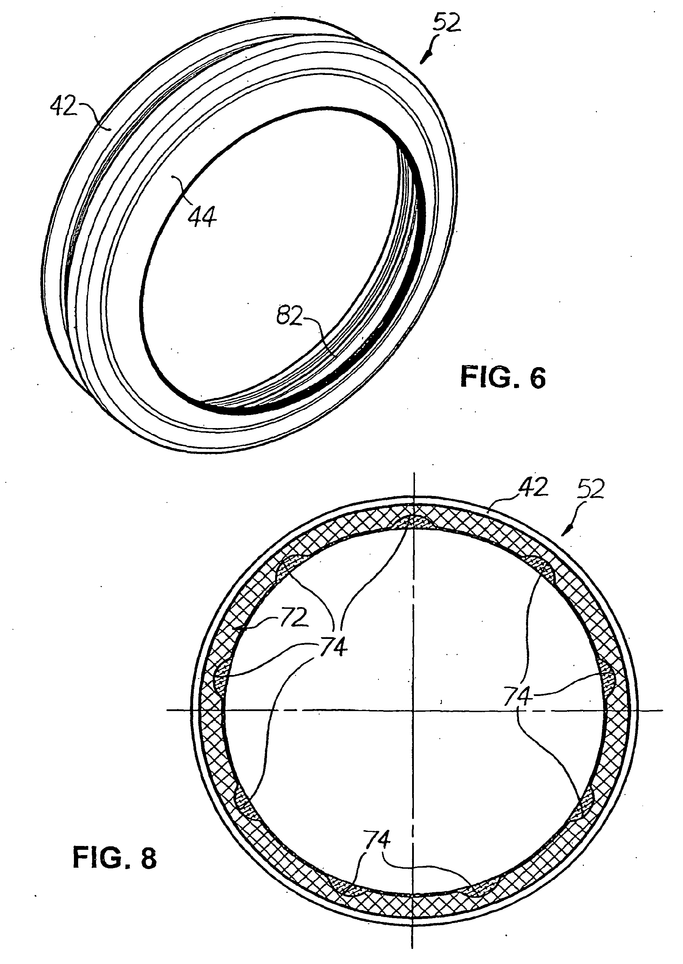

Gemäß den Fig. 6 bis 9 hat das Dichtungsteil 52 der Dichtvorrichtung 40 einen ringförmigen Grundkörper 72, der vorzugsweise ebenfalls aus einem Kunststoff spritzgegossen ist, aber auch aus einem metallischen Werkstoff bestehen könnte. Wie insbesondere die Fig. 1 und 9 zeigen, ist an der der Arbeitskammer 28 zugewandten Stirnseite des Grundkörpers 72 eine sich in Richtung der Arbeitskammer 28 im wesentlichen konisch aufweitende, elastomere Dichtlippe angebracht, die den statischen Dichtabschnitt 42 der Dichtvorrichtung 40 ausbildet. Die sich im wesentlichen konisch aufweitende, statische Dichtlippe liegt gemäß Fig. 1 auf der von der Arbeitskammer 28 abgewandten Seite des Ringbunds 56 am Halsansatz 54 des Verstärkergehäuses 24 dichtend am Ringbund 56 an. An der von der Arbeitskammer 28 abgewandten Stirnseite des Grundkörpers 72 hingegen ist eine sich in Richtung von der Arbeitskammer 28 weg im wesentlichen konisch verjüngende, elastomere Dichtlippe angebracht, die den dynamischen Dichtabschnitt 44 der Dichtvorrichtung 40 ausbildet. Wie die Fig. 1 zeigt, liegt die sich im wesentlichen konisch verjüngende, dynamische Dichtlippe dichtend an der zylindrischen Außenumfangsfläche 58 des Arbeitskolbenschafts 30 an. Gemäß insbesondere Fig. 9 sind beide Dichtlippen materialeinheitlich aus demselben Elastomer ausgebildet, welches den Grundkörper 72 im wesentlichen vollständig umgibt. Hierbei sind die sich zu verschiedenen Seiten des Grundkörpers 72 wegerstreckenden Dichtlippen insbesondere durch elastomeres Material verbunden, welches in innenumfangsseitigen Aussparungen 74 des Grundkörpers 72 aufgenommen ist, die gleichmäßig über den Umfang des Grundkörpers 72 verteilt sind und jeweils einen im wesentlichen halbkreisförmigen Querschnitt aufweisen, wie in Fig. 8 gut zu erkennen ist. Diese Aussparungen 74 dienen nicht nur der Optimierung der Fließwege des elastomeren Materials bei der Herstellung des Dichtungsteils 52, sondern auch der formschlüssigen Festlegung des elastomeren Materials und damit der Dichtlippen am Grundkörper 72.

Das Dichtungsteil 52 der Dichtvorrichtung 40 ist an deren Ankerteil 50 mittels einer Schnappverbindung anbringbar, die in Fig. 1 allgemein mit 76 gekennzeichnet ist. Hierfür weist das Ankerteil 50 gemäß den Fig. 2 bis 5 eine Mehrzahl von, im dargestellten Ausführungsbeispiel vier Federzungen 78 auf, die jeweils mit einem hakenartigen Vorsprung 80 versehen sind, während das Dichtungsteil 52 gemäß den Fig. 6, 7 und 9 eine ringförmige Widerlagerfläche 82 für die hakenartigen Vorsprünge 80 hat, wobei im am Ankerteil 50 angebrachten Zustand des Dichtungsteils 52 die hakenartigen Vorsprünge 80 des Ankerteils 50 die Widerlagerfläche 82 des Dichtungsteils 52 hintergreifen.

Genauer gesagt ist der durchmesserkleinere Hohlzylinderabschnitt 66 des Ankerteils 50, der im am Verstärkergehäuse 24 befestigten Zustand des Ankerteils 50 von der Arbeitskammer 28 weg, d.h. in Fig. 1 nach rechts über den Ringbund 56 am Halsansatz 54 des Verstärkergehäuses 24 vorsteht, mit gleichmäßig über den Umfang verteilten Aussparungen 84 versehen, in die sich jeweils eine der Federzungen 78 vom Ringsteg 68 des Ankerteils 50 ausgehend hinein erstreckt. Dabei sind, wie insbesondere in der Fig. 3 gut zu erkennen ist, die Federzungen 78 bezüglich der den Führungsabschnitt 46 bildenden Innenumfangsfläche des durchmesserkleineren Hohlzylinderabschnitts 66 des Ankerteils 50 nach radial außen versetzt angeordnet und tragen außenumfangsseitig die hakenartige Vorsprünge 80, so daß die Federzungen 78 auch dann noch nach radial innen einfedern können, wenn sich der Arbeitskolbenschaft 30 bereits durch das am Verstärkergehäuse 24 montierte Ankerteil 50 erstreckt.

Wie des weiteren der Fig. 9 zu entnehmen ist, hat der ringförmige Grundkörper 72 des Dichtungsteils 52 innenumfangsseitig eine im montierten Zustand des Dichtungsteils 52 von der Arbeitskammer 28 abgewandte Ringschulter 86, die vom elastomeren Material der Dichtlippen des Dichtungsteils 52 umspritzt die Widerlagerfläche 82 für die hakenartigen Vorsprünge 80 an den Federzungen 78 des Ankerteils 50 bildet. Außenumfangsseitig weist der Grundkörper 72 des Dichtungsteils 52 eine im montierten Zustand des Dichtungsteils 52 der Arbeitskammer 28 zugewandte Ringschulter 88 auf, die nicht vom elastomeren Material der Dichtlippen überdeckt ist und der Befestigung eines in den Figuren nicht gezeigten Faltenbalgs am Unterdruck-Bremskraftverstärker 10 dienen kann, der den Arbeitskolbenschaft 30 gegen eine Verschmutzung von außen schützt.

Bei der Montage der Dichtvorrichtung 40 am Unterdruck-Bremskraftverstärker 10, die vollautomatisch durchgeführt werden kann, wird zunächst das Ankerteil 50 am Verstärkergehäuse 24 befestigt, indem es mit seinem durchmesserkleineren Hohlzylinderabschnitt 66 voran in Fig. 1 von links in den Halsansatz 54 des Verstärkergehäuses 24 eingepreßt wird - die Außenumfangsfläche des durchmessergrößeren Hohlzylinderabschnitts 64 des Ankerteils 50 hat bezüglich der Innenumfangsfläche 60 des Halsansatzes 54 des Verstärkergehäuses 24 ein geringfügiges Übermaß - bis die von der Arbeitskammer 28 abgewandte Stirnseite des Ringstegs 68 des Ankerteils 50 an der der Arbeitskammer 28 zugewandten Stirnseite des Ringbunds 56 am Halsansatz 54 des Verstärkergehäuses 24 zur Anlage gelangt. Sodann kann das Dichtungsteil 52 der Dichtvorrichtung 40 montiert werden.

Hierfür wird das Dichtungsteil 52 mit seinem statischen Dichtabschnitt 42 voran in Fig. 1 von rechts auf den über den Ringbund 56 des Verstärkergehäuses 24 nach außen vorstehenden, durchmesserkleineren Hohlzylinderabschnitt 66 des Ankerteils 50 aufgeschoben. Dabei kommt das Dichtungsteil 52 innenumfangsseitig an von der Arbeitskammer 28 abgewandten Fügeschrägen 90 (Fig. 2 bis 5) an den hakenartigen Vorsprüngen 80 auf den Federzungen 78 des Ankerteils 50 zur Anlage, worauf die Federzungen 78 nach radial innen einfedern. Nach weiterer Relativverschiebung des Dichtungsteils 52 bezüglich des Ankerteils 50 federn die Federzungen 78 zurück und schnappen mit ihren hakenartigen Vorsprüngen 80 hinter der Widerlagerfläche 82 am Dichtungsteil 52 ein bzw. verrasten mit dieser, so daß die hakenartigen Vorsprünge 80 die Widerlagerfläche 82 hintergreifen und somit das Dichtungsteil 52 formschlüssig am Ankerteil 50 halten. Zugleich mit dem Herstellen der Schnappverbindung 76 kommt die den statischen Dichtabschnitt 42 ausbildende Dichtlippe des Dichtungsteils 52 an der von der Arbeitskammer 28 abgewandten Stirnseite des Ringbunds 56 am Halsansatz 54 des Verstärkergehäuses 24 zur Anlage und wird axial vorgespannt.

Nach der Montage des Dichtungsteils 52 an dem am Verstärkergehäuse 24 befestigten Ankerteil 50 - oder den jeweiligen Montageerfordernissen entsprechend auch davor - wird der Arbeitskolbenschaft 30 des Arbeitskolbens 16 in Fig. 1 von links durch den Halsansatz 54 des Verstärkergehäuses 24 und das Ankerteil 50 der Dichtvorrichtung 40 hindurch gesteckt, wobei der Arbeitskolbenschaft 30 zunächst an der Fügeschräge 70 des Ankerteils 50 bezüglich des Ankerteils 50 zentriert und sodann mit seiner Außenumfangsfläche 58 an der den Führungsabschnitt 46 der Dichtvorrichtung 40 ausbildenden Innenumfangsfläche des durchmesserkleineren Hohlzylinderabschnitts 66 des Ankerteils 50 geführt wird. Hierbei kann der Arbeitskolbenschaft 30 mit einem Fett geschmiert werden, welches vorab auf der Außenumfangsfläche 58 des Arbeitskolbenschafts 30 aufgetragen wird oder sich als ringförmiger Fettwulst (nicht dargestellt) zwischen der Widerlagerfläche 82 und der den dynamischen Dichtabschnitt 44 ausbildenden Dichtlippe am Dichtungsteil 52 befindet. Infolge der bezüglich der Arbeitskammer 28 äußeren Anordnung des Dichtungsteils 52 bleibt eine solche Fettschmierung im Bereich des Führungsabschnitts 46 der Dichtvorrichtung 40 auch im Betrieb des Unterdruck-Bremskraftverstärkers 10 erhalten. Beim Hindurchstecken des Arbeitskolbenschafts 30 durch das Dichtungsteil 52 (bzw. beim Aufschieben des Dichtungsteils 52 auf den Arbeitskolbenschaft 30) wird schließlich die den dynamischen Dichtabschnitt 44 des Dichtungsteils 52 ausbildende Dichtlippe infolge der Anlage an der Außenumfangsfläche 58 des Arbeitskolbenschafts 30 radial vorgespannt.

Es wird ein Unterdruck-Bremskraftverstärker offenbart, der ein Verstärkergehäuse hat, in dem eine Unterdruckkammer von einer Arbeitskammer mittels eines Arbeitskolbens mit einem Arbeitskolbenschaft getrennt ist, der sich durch eine Öffnung im Verstärkergehäuse hindurch erstreckt. Am Verstärkergehäuse ist im Öffnungsbereich eine Dichtvorrichtung montiert, die einen gegenüber dem Verstärkergehäuse abdichtenden statischen Dichtabschnitt, einen gegenüber dem Arbeitskolbenschaft abdichtenden dynamischen Dichtabschnitt, einen Führungsabschnitt für den Arbeitskolbenschaft sowie eine Anschlagfläche für ein letzteren durchgreifendes, einen Rückhub des Arbeitskolbens begrenzendes Querglied aufweist. Erfindungsgemäß ist die Dichtvorrichtung zweigeteilt, mit einem den Führungsabschnitt und die Anschlagfläche ausbildenden, am Verstärkergehäuse befestigten Ankerteil sowie einem beide Dichtabschnitte umfassenden Dichtungsteil, das nach Befestigung des Ankerteils am Verstärkergehäuse am Ankerteil anbringbar ist. Im Ergebnis wird ein Unterdruck-Bremskraftverstärker geschaffen, der eine einfach montierbare Dichtvorrichtung aufweist, welche die Arbeitskammer zuverlässig und dauerhaft gegen die Umgebung abzudichten vermag.

### BEZUGSZEICHENLISTE

- 10: Unterdruck-Bremskraftverstärker
- 12: Steuerkolben
- 14: Kolbenstange
- 16: Arbeitskolben
- 18: Reaktionsscheibe
- 20: Stößel
- 22: Rückstellfeder
- 24: Verstärkergehäuse
- 26: Unterdruckkammer
- 28: Arbeitskammer
- 30: Arbeitskolbenschaft
- 32: Öffnung
- 34: Ventilanordnung
- 36: Umgebung
- 38: Querglied
- 40: Dichtvorrichtung
- 42: statischer Dichtabschnitt
- 44: dynamischer Dichtabschnitt
- 46: Führungsabschnitt
- 48: Anschlagfläche
- 50: Ankerteil
- 52: Dichtungsteil
- 54: Halsansatz
- 56: Ringbund
- 58: Außenumfangsfläche
- 60: Innenumfangsfläche
- 62: Ringraum
- 64: Hohlzylinderabschnitt
- 66: Hohlzylinderabschnitt
- 68: Ringsteg
- 70: Fügeschräge
- 72: Grundkörper
- 74: Aussparung
- 76: Schnappverbindung
- 78: Federzunge
- 80: hakenartiger Vorsprung
- 82: Widerlagerfläche
- 84: Aussparung
- 86: Ringschulter
- 88: Ringschulter
- 90: Fügeschräge

## Patentansprüche

1. Unterdruck-Bremskraftverstärker (10) für Kraftfahrzeuge, mit einem Verstärkergehäuse (24), in dem eine Unterdruckkammer (26) von einer Arbeitskammer (28) mittels eines Arbeitskolbens (16) getrennt ist, welcher einen Arbeitskolbenschaft (30) aufweist, der sich durch eine arbeitskammerseitige Öffnung (32) des Verstärkergehäuses (24) hindurch erstreckt, wobei an dem Verstärkergehäuse (24) im Bereich der Öffnung (32) eine Dichtvorrichtung (40) angebracht ist, die einen gegenüber dem Verstärkergehäuse (24) abdichtenden statischen Dichtabschnitt (42), einen gegenüber dem Arbeitskolbenschaft (30) abdichtenden dynamischen Dichtabschnitt (44), einen Führungsabschnitt (46) für den Arbeitskolbenschaft (30) sowie eine Anschlagfläche (48) für ein den Arbeitskolbenschaft (30) durchgreifendes, einen Rückhub des Arbeitskolbens (16) begrenzendes Querglied (38) aufweist, **dadurch gekennzeichnet, daß** die Dichtvorrichtung (40) zweigeteilt ist, mit einem den Führungsabschnitt (46) und die Anschlagfläche (48) ausbildenden, am Verstärkergehäuse (24) befestigten Ankerteil (50) sowie einem den statischen Dichtabschnitt (42) und den dynamischen Dichtabschnitt (44) aufweisenden Dichtungsteil (52), das nach Befestigung des Ankerteils (50) am Verstärkergehäuse (24) an dem Ankerteil (50) anbringbar ist.

2. Unterdruck-Bremskraftverstärker (10) nach Anspruch 1, **dadurch gekennzeichnet, daß** das Verstärkergehäuse (24) einen hohlzylindrischen Halsansatz (54) aufweist, der an seinem von der Arbeitskammer (28) abgewandten Ende mit einem sich nach radial innen erstreckenden Ringbund (56) endet.

3. Unterdruck-Bremskraftverstärker (10) nach Anspruch 2, **dadurch gekennzeichnet, daß** das Ankerteil (50) der Dichtvorrichtung (40) auf der der Arbeitskammer (28) zugewandten Seite des Ringbunds (56) angeordnet ist, während das Dichtungsteil (52) der Dichtvorrichtung (40) auf der von der Arbeitskammer (28) abgewandten Seite des Ringbunds (56) angeordnet ist.

4. Unterdruck-Bremskraftverstärker (10) nach Anspruch 2 oder 3, **dadurch gekennzeichnet, daß** das Ankerteil (50) der Dichtvorrichtung (40) in den Halsansatz (54) des Verstärkergehäuses (24) eingepreßt ist und auf der der Arbeitskammer (28) zugewandten Seite des Ringbunds (56) am Ringbund (56) anliegt.

5. Unterdruck-Bremskraftverstärker (10) nach einem der vorhergehenden Ansprüche, **dadurch gekennzeichnet, daß** das Ankerteil (50) der Dichtvorrichtung (40) zwei Hohlzylinderabschnitte (64, 66) unterschiedlichen Durchmessers aufweist, die mittels eines Ringstegs (68) miteinander verbunden sind.

6. Unterdruck-Bremskraftverstärker (10) nach Anspruch 5, **dadurch gekennzeichnet, daß** der durchmessergrößere Hohlzylinderabschnitt (64) des Ankerteils (50) der Befestigung des Ankerteils (50) am Verstärkergehäuse (24) dient.

7. Unterdruck-Bremskraftverstärker (10) nach Anspruch 5 oder 6, **dadurch gekennzeichnet, daß** eine Innenumfangsfläche des durchmesserkleineren Hohlzylinderabschnitts (66) des Ankerteils (50) den Führungsabschnitt (46) für den Arbeitskolbenschaft (30) ausbildet.

8. Unterdruck-Bremskraftverstärker (10) nach einem der Ansprüche 5 bis 7, **dadurch gekennzeichnet, daß** der Ringsteg (68) des Ankerteils (50) mit seiner der Arbeitskammer (28) zugewandten Stirnseite die Anschlagfläche (48) für das den Arbeitskolbenschaft (30) durchgreifende, den Rückhub des Arbeitskolbens (16) begrenzende Querglied (38) ausbildet.

9. Unterdruck-Bremskraftverstärker (10) nach einem der vorhergehenden Ansprüche, **dadurch gekennzeichnet, daß** das Dichtungsteil (52) der Dichtvorrichtung (40) einen ringförmigen Grundkörper (72) aufweist, an dessen der Arbeitskammer (28) zugewandten Stirnseite eine sich in Richtung der Arbeitskammer (28) im wesentlichen konisch aufweitende, elastomere Dichtlippe angebracht ist, die den statischen Dichtabschnitt (42) der Dichtvorrichtung (40) ausbildet.

10. Unterdruck-Bremskraftverstärker (10) nach den Ansprüchen 2 und 9, **dadurch gekennzeichnet, daß** die sich im wesentlichen konisch aufweitende, elastomere Dichtlippe auf der von der Arbeitskammer (28) abgewandten Seite des Ringbunds (56) am Halsansatz (54) des Verstärkergehäuses (24) dichtend am Ringbund (56) anliegt.

11. Unterdruck-Bremskraftverstärker (10) nach einem der vorhergehenden Ansprüche, **dadurch gekennzeichnet, daß** das Dichtungsteil (52) der Dichtvorrichtung (40) einen ringförmigen Grundkörper (72) aufweist, an dessen von der Arbeitskammer (28) abgewandten Stirnseite eine sich in Richtung von der Arbeitskammer (28) weg im wesentlichen konisch verjüngende, elastomere Dichtlippe angebracht ist, die den dynamischen Dichtabschnitt (44) der Dichtvorrichtung (40) ausbildet.

12. Unterdruck-Bremskraftverstärker (10) nach Anspruch 11, **dadurch gekennzeichnet, daß** die sich im wesentlichen konisch verjüngende, elastomere Dichtlippe dichtend an einer zylindrischen Außenumfangsfläche (58) des Arbeitskolbenschafts (30) anliegt.

13. Unterdruck-Bremskraftverstärker (10) nach einem der vorhergehenden Ansprüche, **dadurch gekennzeichnet, daß** das Dichtungsteil (52) der Dichtvorrichtung (40) mittels einer Schnappverbindung (76) am Ankerteil (50) der Dichtvorrichtung (40) anbringbar ist.

14. Unterdruck-Bremskraftverstärker (10) nach Anspruch 13, **dadurch gekennzeichnet, daß** das Ankerteil (50) eine Mehrzahl von Federzungen (78) aufweist, die jeweils mit einem hakenartigen Vorsprung (80) versehen sind, während das Dichtungsteil (52) eine Widerlagerfläche (82) für die hakenartigen Vorsprünge (80) hat, wobei im am Ankerteil (50) angebrachten Zustand des Dichtungsteils (52) die hakenartigen Vorsprünge (80) des Ankerteils (50) die Widerlagerfläche (82) des Dichtungsteils (52) hintergreifen.

15. Unterdruck-Bremskraftverstärker (10) nach den Ansprüchen 5 und 14, **dadurch gekennzeichnet, daß** der durchmesserkleinere Hohlzylinderabschnitt (66) des Ankerteils (50) mit gleichmäßig über den Umfang verteilten Aussparungen (84) versehen ist, in die sich jeweils eine der Federzungen (78) vom Ringsteg (68) des Ankerteils (50) ausgehend hinein erstreckt.

16. Unterdruck-Bremskraftverstärker (10) nach Anspruch 15, **dadurch gekennzeichnet, daß** die Federzungen (78) bezüglich der Innenumfangsfläche des durchmesserkleineren Hohlzylinderabschnitts (66) des Ankerteils (50) nach radial außen versetzt angeordnet sind und außenumfangsseitig die hakenartige Vorsprünge (80) tragen.

17. Unterdruck-Bremskraftverstärker (10) nach einem der Ansprüche 14 bis 16, **dadurch gekennzeichnet, daß** der ringförmige Grundkörper (72) des Dichtungsteils (52) innenumfangsseitig eine Ringschulter (86) aufweist, die vom elastomeren Material der Dichtlippen des Dichtungsteils (52) umspritzt die Widerlagerfläche (82) für die hakenartigen Vorsprünge (80) des Ankerteils (50) ausbildet.

## Claims

1. Vacuum brake booster (10) for motor vehicles, comprising a booster housing (24) in which a vacuum chamber (26) is separated from a working chamber (28) by means of a working piston (16) which has a working piston shaft (30) which extends through an opening (32) on the working chamber side of the booster housing (24), wherein attached to the booster housing (24) in the region of the opening (32) is a sealing device (40) which has a static sealing section (42) providing sealing with respect to the booster housing (24), a dynamic sealing section (44) providing sealing with respect to the working piston shaft (30), a guide section (46) for the working piston shaft (30), and a stop face (48) for a cross-member (38) which passes through the working piston shaft (30) and limits a return stroke of the working piston (16), **characterised in that** the sealing device (40) is split into two parts, with an anchoring part (50) which forms the guide section (46) and the stop face (48) and which is fixed to the booster housing (24), and a sealing part (52) which comprises the static sealing section (42) and the dynamic sealing section (44) and which can be attached to the anchoring part (50) after the anchoring part (50) has been fixed to the booster housing (24).

2. Vacuum brake booster (10) according to claim 1, **characterised in that** the booster housing (24) has a hollow-cylindrical neck attachment (54) which terminates at its end facing away from the working chamber (28) with an annular collar (56) which extends radially inwards.

3. Vacuum brake booster (10) according to claim 2, **characterised in that** the anchoring part (50) of the sealing device (40) is arranged on the side of the annular collar (56) which faces towards the working chamber (28), while the sealing part (52) of the sealing device (40) is arranged on the side of the annular collar (56) which faces away from the working chamber (28).

4. Vacuum brake booster (10) according to claim 2 or 3, **characterised in that** the anchoring part (50) of the sealing device (40) is pressed into the neck attachment (54) of the booster housing (24) and bears against the annular collar (56) on the side of the annular collar (56) which faces towards the working chamber (28).

5. Vacuum brake booster (10) according to any one of the preceding claims, **characterised in that** the anchoring part (50) of the sealing device (40) has two hollow-cylindrical sections (64, 66) of different diameter which are connected to one another by means of an annular web (68).

6. Vacuum brake booster (10) according to claim 5, **characterised in that** the larger-diameter hollow-cylindrical section (64) of the anchoring part (50) serves to fix the anchoring part (50) to the booster housing (24).

7. Vacuum brake booster (10) according to claim 5 or 6, **characterised in that** an inner circumferential surface of the smaller-diameter hollow-cylindrical section (66) of the anchoring part (50) forms the guide section (46) for the working piston shaft (30).

8. Vacuum brake booster (10) according to any one of claims 5 to 7, **characterised in that** the annular web (68) of the anchoring part (50) forms with its end side facing towards the working chamber (28) the stop face (48) for the cross-member (38) which passes through the working piston (30) and limits the return stroke of the working piston (16).

9. Vacuum brake booster (10) according to any one of the preceding claims, **characterised in that** the sealing part (52) of the sealing device (40) has an annular main body (72), on the end side of which facing towards the working chamber (28) there is attached an elastomeric sealing lip which widens in a substantially conical manner towards the working chamber (28) and forms the static sealing section (42) of the sealing device (40).

10. Vacuum brake booster (10) according to claims 2 and 9, **characterised in that** the elastomeric sealing lip which widens in a substantially conical manner bears in a sealing manner against the annular collar (56) on the neck attachment (54) of the booster housing (24), on the side of the annular collar (56) facing away from the working chamber (28).

11. Vacuum brake booster (10) according to any one of the preceding claims, **characterised in that** the sealing part (52) of the sealing device (40) has an annular main body (72), on the end side of which facing away from the working chamber (28) there is attached an elastomeric sealing lip which tapers in a substantially conical manner away from the working chamber (28) and forms the dynamic sealing section (44) of the sealing device (40).

12. Vacuum brake booster (10) according to claim 11, **characterised in that** the elastomeric sealing lip which tapers in a substantially conical manner bears in a sealing manner against a cylindrical outer circumferential surface (58) of the working piston shaft (30).

13. Vacuum brake booster (10) according to any one of the preceding claims, **characterised in that** the sealing part (52) of the sealing device (40) can be attached by means of a snap-in connection (76) to the anchoring part (50) of the sealing device (40).

14. Vacuum brake booster (10) according to claim 13, **characterised in that** the anchoring part (50) has a plurality of flexible tongues (78) which are in each case provided with a hook-like protrusion (80), while the sealing part (52) has an abutment face (82) for the hook-like protrusions (80), wherein, when the sealing part (52) is attached to the anchoring part (50), the hook-like protrusions (80) of the anchoring part (50) engage behind the abutment face (82) of the sealing part (52).

15. Vacuum brake booster (10) according to claims 5 and 14, **characterised in that** the smaller-diameter hollow-cylindrical section (66) of the anchoring part (50) is provided with cutouts (84) which are distributed evenly around the circumference and into each of which there extends one of the flexible tongues (78) coming from the annular web (68) of the anchoring part (50).

16. Vacuum brake booster (10) according to claim 15, **characterised in that** the flexible tongues (78) are arranged offset radially outwards relative to the inner circumferential surface of the smaller-diameter hollow-cylindrical section (66) of the anchoring part (50) and carry the hook-like protrusions (80) on the outer circumference side.

17. Vacuum brake booster (10) according to any one of claims 14 to 16, **characterised in that** the annular main body (72) of the sealing part (52) has on the inner circumference an annular shoulder (86), around which the elastomeric material of the sealing lips of the sealing part (52) is injected and which forms the abutment face (82) for the hook-like protrusions (80) of the anchoring part (50).

## Revendications

1. Servofrein à dépression (10) pour véhicules automobiles, comportant un boîtier d'amplificateur (24) dans lequel une chambre de dépression (26) est séparée d'une chambre de travail (28) au moyen d'un piston de travail (16) qui présente une tige de piston de travail (30) qui s'étend à travers une ouverture (32) côté chambre de travail, du boîtier d'amplificateur (24), et sur le boîtier d'amplificateur (24), dans la zone de l'ouverture (32) étant monté un dispositif d'étanchéité (40) qui présente un tronçon d'étanchéité (42) statique produisant un étanchement par rapport au boîtier d'amplificateur (24), un tronçon d'étanchéité (44) dynamique produisant un étanchement par rapport à la tige de piston de travail (30), un tronçon de guidage (46) pour la tige de piston de travail (30) ainsi qu'une surface de butée (48) pour un organe transversal (38) passant à travers la tige de piston de travail (30) et limitant une course de retour du piston de travail (16), **caractérisé en ce que** le dispositif d'étanchéité (40) est divisé en deux parties avec une partie d'ancrage (50) réalisant le tronçon de guidage (46) et la surface de butée (48) et fixée sur le boîtier d'amplificateur (24) ainsi qu'avec une partie de joint d'étanchéité (52) présentant le tronçon d'étanchéité (42) statique et le tronçon d'étanchéité (44) dynamique, laquelle peut être montée sur la partie d'ancrage (50) après la fixation de la partie d'ancrage (50) sur le boîtier d'amplificateur (24).

2. Servofrein à dépression (10) selon la revendication 1, **caractérisé en ce que** le boîtier d'amplificateur (24) présente une embase en forme de col (54) cylindrique creuse qui se termine à son extrémité détournée de la chambre de travail (28) par une collerette annulaire (56) s'étendant radialement vers l'intérieur.

3. Servofrein à dépression (10) selon la revendication 2, **caractérisé en ce que** la partie d'ancrage (50) du dispositif d'étanchéité (40) est agencé sur le côté de la collerette annulaire (56) qui est tourné vers la chambre de travail (28), tandis que la partie de joint d'étanchéité (52) du dispositif d'étanchéité (40) est agencée sur le côté de la collerette annulaire (56) qui est détourné de la chambre de travail (28).

4. Servofrein à dépression (10) selon la revendication 2 ou 3, **caractérisé en ce que** la partie d'ancrage (50) du dispositif d'étanchéité (40) est pressée dans l'embase en forme de col (54) du boîtier d'amplificateur (24) et est en appui sur la collerette annulaire (56) sur le côté de la collerette annulaire (56), qui est tourné vers la chambre de travail (28).

5. Servofrein à dépression (10) selon l'une quelconque des revendications précédentes, **caractérisé en ce que** la partie d'ancrage (50) du dispositif d'étanchéité (40) présente deux tronçons cylindriques creux (64, 66) de différent diamètre qui sont reliés l'un à l'autre au moyen d'une barrette annulaire (68).

6. Servofrein à dépression (10) selon la revendication 5, **caractérisé en ce que** le tronçon cylindrique creux (64) de plus grand diamètre de la partie d'ancrage (50) sert à la fixation de la partie d'ancrage (50) sur le boîtier d'amplificateur (24).

7. Servofrein à dépression (10) selon la revendication 5 ou 6, **caractérisé en ce qu'**une surface périphérique intérieure du tronçon cylindrique creux (66) de plus petit diamètre de la partie d'ancrage (50) forme le tronçon de guidage (46) pour la tige de piston de travail (30).

8. Servofrein à dépression (10) selon l'une des revendications 5 à 7, **caractérisé en ce que** la barrette annulaire (68) de la partie d'ancrage (50) forme avec sa face frontale tournée vers la chambre de travail (28) la surface de butée (48) pour l'organe transversal (38) s'engageant à travers la tige de piston de travail (30) et limitant la course de retour du piston de travail (16).

9. Servofrein à dépression (10) selon l'une quelconque des revendications précédentes, **caractérisé en ce que** la partie de joint d'étanchéité (52) du dispositif d'étanchéité (40) présente un corps de base (72) annulaire sur la face frontale, tournée vers la chambre de travail (28), duquel est montée une lèvre d'étanchéité élastomère s'évasant de façon sensiblement conique en direction de la chambre de travail (28), qui forme le tronçon d'étanchéité (42) statique du dispositif d'étanchéité (40).

10. Servofrein à dépression (10) selon les revendications 2 et 9, **caractérisé en ce que** sur le côté détourné de la chambre de travail (28), de la collerette annulaire (56), la lèvre d'étanchéité élastomère s'évasant de façon sensiblement conique est en appui sur l'embase de col (54) du boîtier d'amplificateur (24) de manière étanche sur la collerette annulaire (56).

11. Servofrein à dépression (10) selon l'une quelconque des revendications précédentes, **caractérisé en ce que** la partie de joint d'étanchéité (52) du dispositif d'étanchéité (40) présente un corps de base (72) annulaire, sur la face frontale détournée de la chambre de travail (28)m duquel est montée une lèvre d'étanchéité élastomère se rétrécissant de façon sensiblement conique en éloignement de la direction de la chambre de travail (28), qui forme le tronçon d'étanchéité (44) dynamique du dispositif d'étanchéité (40).

12. Servofrein à dépression (10) selon la revendication 11, **caractérisé en ce que** la lèvre d'étanchéité élastomère se rétrécissant de façon sensiblement conique est en appui de manière étanche sur une surface périphérique extérieure cylindrique (58) de la tige de piston de travail (30).

13. Servofrein à dépression (10) selon l'une quelconque des revendications précédentes, **caractérisé en ce que** la partie de joint d'étanchéité (52) du dispositif d'étanchéité (40) peut être montée au moyen d'une liaison par encliquetage (76) sur la partie d'ancrage (50) du dispositif d'étanchéité (40).

14. Servofrein à dépression (10) selon la revendication 13, **caractérisé en ce que** la partie d'ancrage (50) présente une pluralité de languettes élastiques (78) qui sont pourvues chacune d'une saillie (80) en forme de crochet tandis que la partie de joint d'étanchéité (52) a une surface de contre-appui (82) pour les saillies (80) en forme de crochets, et dans l'état dans lequel la partie de joint d'étanchéité (52) est montée sur la partie d'ancrage (50), les saillies (80) en forme de crochets de la partie d'ancrage (50) s'engagent derrière la surface de contre-appui (82) de la partie de joint d'étanchéité (52).

15. Servofrein à dépression (10) selon les revendications 5 et 14, **caractérisé en ce que** le tronçon cylindrique creux (66) de plus petit diamètre, de la partie d'ancrage (50), est pourvu d'évidements (84) répartis régulièrement sur la périphérie, dans lesquels une des languettes élastiques (78) s'étend respectivement en partant de la barrette annulaire (68) de la partie d'ancrage (50).

16. Servofrein à dépression (10) selon la revendication 15, **caractérisé en ce que** les languettes élastique (78) sont agencées avec décalage radial vers l'extérieur par rapport à la surface périphérique intérieure du tronçon cylindrique creux (66), de plus petit diamètre, de la partie d'ancrage (50) et portent sur la périphérie extérieure les saillies (80) en forme de crochets.

17. Servofrein à dépression (10) selon l'une des revendications 14 à 16, **caractérisé en ce que** le corps de base (72) annulaire de la partie de joint d'étanchéité (52) présente sur la périphérie intérieure une épaule annulaire (86) qui, enrobée par le matériau élastomère des lèvres d'étanchéité de la partie de joint d'étanchéité (52), constitue la surface de contre-appui (82) pour les saillies (80) en forme de crochets de la partie d'ancrage (50).
